# EUROPEAN PATENT SPECIFICATION

(11) **EP 1 855 966 B1**
(45) Date of publication and mention of the grant of the patent: **22.02.2012**
(21) Application number: 06716974.8
(22) Date of filing: 08.03.2006
(51) Int. Cl.: B65G 21/18, F16G 13/06, B65G 17/38

(54) **SUPPORTING INSTALLATION, CONVEYOR CHAIN FOR SUCH SUPPORTING INSTALLATION AND CHAIN LINK FOR SUCH CONVEYOR CHAIN**
STÜTZANORDNUNG, FÖRDERKETTE FÜR SOLCH EINE STÜTZANORDNUNG UND KETTENGLIED FÜR SOLCH EINE FÖRDERKETTE
INSTALLATION DE SUPPORT, CHAINE TRANSPORTEUSE POUR CETTE INSTALLATION ET MAILLON DE CHAINE POUR CETTE CHAINE TRANSPORTEUSE

(30) Priority: 11.03.2005 SE 0500580
(43) Date of publication of application: 21.11.2007
(73) Proprietor: John Bean Technologies AB, 251 09 Helsingborg (SE)
(72) Inventor: CARLSSON, Thomas, S-335 91 Gnosjö (SE); ASSARSSON, Jonas, S-237 37 Bjärred (SE); JOHANSSON, Gösta, S-335 31 Gnojö (SE); WILTHORN, Urban, S-261 38 Landskron (SE); MOREY, Owen E., Huron, OH 44839 (US)
(74) Representative: Andersson, Mikael Per Robert
(86) International application number: PCT/SE2006/000288
(87) International publication number: WO 2006/096119

(56) References cited:
- WO-A1-00/75052
- DE-A1- 3 926 475
- US-A- 3 682 295
- US-A- 4 565 282
- US-A- 4 899 871

## Description

### Field of the Invention

The present invention relates to a chain link for a conveyor chain included in a supporting installation and more specifically a chain link comprising a first connecting element adapted to connect the chain link to a neighbouring second chain link on a first side, and a second connecting element adapted to connect the chain link to a neighbouring third chain link on a second side opposite the first side, said first and second connecting elements being arranged so that the chain link is laterally pivotable relative to said second and said third chain link, and said first and second connecting elements being arranged at a distance from each other in a direction along which the chain link as well as the second and the third chain link are arranged. The present invention also relates to a conveyor chain comprising a plurality of such chain links as well as a supporting installation comprising such a conveyor chain.

### Background Art

Supporting installations comprising a conveyor chain with chain links of the type described by way of introduction are used, for instance, in the food industry to support conveyor belts in compact air treatment plants, in which products arranged on the conveyor belt are exposed to an airflow. The airflow can be arranged, for instance, to freeze, cool, dry or heat the products.

Such a supporting installation can be arranged to support and drive a belt pile, that is a number of belt turns of a conveyor belt, extending helically one above the other in a pile. One or more conveyor chains of the supporting installation can be arranged to support the lowermost belt turn along substantially its entire extent. The conveyor chains are in turn supported by a frame.

Such supporting installations are known from, for instance, US 4,899,871, US 4,565,282, WO04/045994.

A conveyor chain frequently comprises a plurality of chain links having bearing seats, which together with a bearing race in a sectional element of the frame define a channel in which bearing elements in the form of balls are arranged.

Each chain link further comprises connecting elements to allow interconnection of neighbouring chain links, and such connecting elements may have the shape of cylindrical sleeves.

By the belt pile weight transferred to the frame being transferred eccentrically relative to the bearing elements, the chain links are exposed to a torque which strives to tilt them. For this reason, the frame can have a sliding strip, in which case the connecting elements of the chain links and also the lower flanges of the same abut against the sliding strip to counteract said torque.

The strain to which the conveyor chain is exposed in operation results in wear on the chain links. Increasing wear on the chain links results in the fact that, to a decreasing extent, they are capable of counteracting said torque, which in turn results in tilting of the chain links of the conveyor chain. When the tilt of the chain links exceeds a certain threshold value, usually about 3-4°, the conveyor chain must be discarded.

In normal operation, a conventional conveyor chain has a length of service of about 10000-15000 hours.

However, in some applications it has been found that the chain links of the conveyor chain are subjected to reinforced wear which results in a considerable reduction of the life of service.

This is a problem especially when the weight of the belt pile is high.

This problem is sometimes also encountered when the conveyor chain is used in an air treatment plant which is arranged for heating of products since the sliding strip of the frame must in this case be made of a heat-resistant material which frequently exhibits abrasive properties.

There is thus a need for a supporting installation with a conveyor chain whose chain links are more resistant to wear.

### Summary of the Invention

In view of that stated above, a first object of the present invention is to provide a chain link which is resistant to wear.

A second object is to provide a chain link which in a relatively easy manner can be restored at a relatively low cost.

It is also an object of the present invention to provide a conveyor chain comprising such chain links.

Another object is to provide a supporting installation comprising a conveyor chain with such chain links.

According to the present invention, there are provided, to achieve at least one of these objects and also other objects that will be evident from the following description, a chain link having the features defined in claim 1, a conveyor chain having the features defined in claim 14, and a supporting installation having the features defined in claim 15. Embodiments of the chain link will be evident from claims 2-13 that are depended from claim 1.

More specifically, according to the present invention a chain link for a conveyor chain included in a supporting installation is provided, comprising an upper flange and a lower flange, a first connecting element extended along a hole axis and adapted to connect the chain link to a neighbouring second chain link on a first side, and a second connecting element extended along a hole axis and adapted to connect the chain link to a neighbouring third chain link on a second side opposite the first side. The first and second connecting elements are arranged so that the chain link is laterally pivotable relative to said second and said third chain link. The connecting elements are arranged at a distance from each other in a longitudinal direction along which the chain link as well as the second and the third chain link are arranged. The lower flange is connected to the upper flange and arranged at a distance therefrom seen in a direction perpendicular to both said longitudinal direction and a transverse direction of the chain link. The chain link further comprises a bearing element which is arranged between said upper flange and said lower flange and has a sliding surface, which in the direction extends between the first and the second connecting element, is parallel to a plane coinciding with the hole axes of the connecting elements and relative to said connecting elements is laterally displaced so that said sliding surface is movable into abutment against and slidable in said direction along a sliding strip.

This results in a chain link which has good resistance to wear. This is achieved more specifically by means of the bearing element which, due to the fact that its sliding surface is laterally displaced relative to the connecting elements, ensures that the contact between the connecting elements and said sliding strip is prevented, or in any case minimised. The wear on the chain link will thus be concentrated on said bearing element, whose sliding surface in turn allows the wear to be distributed over a relatively large surface.

The inventive chain link may have a bearing seat, which makes it possible to arrange a conveyor chain comprising chain links of this type in such a manner that it is capable of taking up the weight of a belt pile via roll elements arranged in a channel which is partly defined by said bearing seat.

The chain link may also have a recess which allows engagement with a drive device. As a result, a conveyor chain comprising chain links of this type can easily be arranged to drive a conveyor belt.

The bearing element of the chain link can be detachably arranged. This makes it possible to exchange said bearing element when worn out, thereby eliminating the need for exchange of the entire conveyor chain when worn out to a certain extent. For obvious reasons, this gives considerable economical advantages.

The bearing element of the chain link can be connected to said connecting elements by a snap lock arrangement and can, to this end, be C-shaped in cross-section and be made of spring steel. Alternatively said bearing element can be L-shaped in cross-section, in which case a resilient tongue is arranged in a base leg for engagement in a hole in the chain link.

The chain link may also comprise a body, in which two through holes, which are extended along mutually parallel hole axes, are formed, which holes form said first and second connecting elements, said body having a lateral surface which is arranged parallel to said hole axes and forms said bearing element.

According to the present invention, also a conveyor chain for a supporting installation is provided, comprising a plurality of chain links of one of the types described above.

Finally, according to the present invention, a supporting installation is provided for supporting and driving a number of belt turns, which extend helically one above the other in a pile and are included in an at least partly self-supporting conveyor belt, comprising a conveyor chain arranged to support an edge portion of the lowermost belt turn along at least part of its extent and comprising a plurality of chain links of the type described above, and a frame which is arranged to support the conveyor chain and which has a sectional element with an elongate bearing race and an elongate sliding strip.

Embodiments of the present invention will now be described by way of example and with reference to the accompanying drawings.

### Brief Description of the Drawings

Fig. 1 is a schematic perspective view of a supporting installation.
Fig. 2 is a schematic perspective view of a belt pile.
Fig. 3 is a perspective view of a supporting installation which supports the lowermost turn of a belt pile.
Fig. 4 is a perspective view of a first embodiment of an inventive chain link.
Fig. 5 is a top plan view of the chain link in Fig. 4.
Fig. 6 is a perspective view of a second embodiment of an inventive chain link.
Fig. 7 is a top plan view of the chain link in Fig. 6.
Fig. 8 is a perspective view of a third embodiment of an inventive chain link.
Fig. 9 is a side view of the chain link in Fig. 8.
Fig. 10 is a perspective view of a body included in a fourth embodiment of an inventive chain link.

### Description of Embodiments

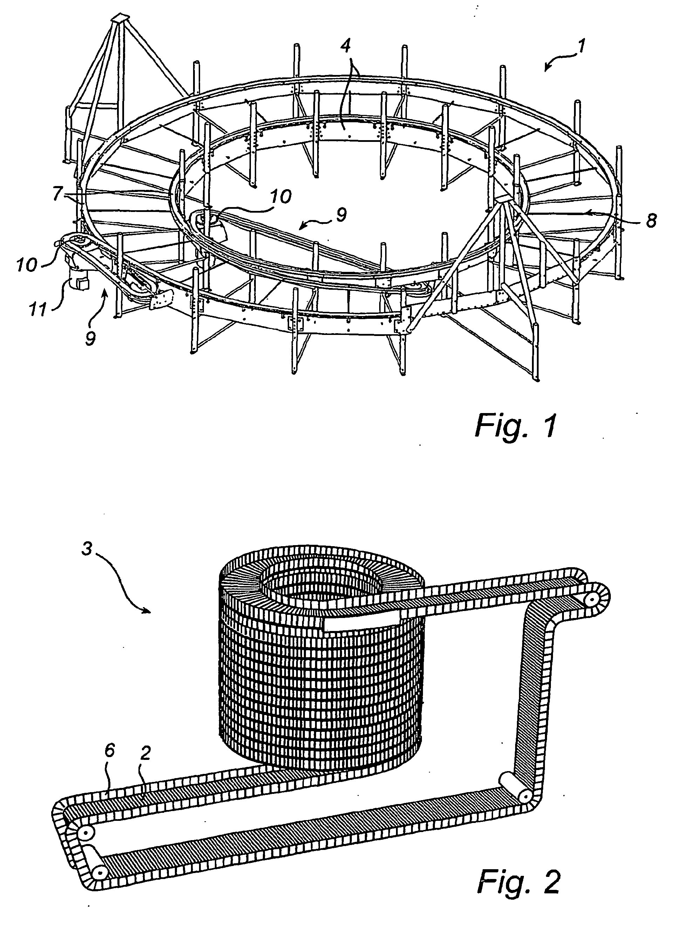

Fig. 1 illustrates an embodiment of a supporting installation 1 according to the present invention for supporting a helically extending endless conveyor belt 2 as shown in Fig. 2, hereinafter referred to as a belt pile 3.

The supporting installation 1 can, in combination with the conveyor belt 2, be used in air treatment plants. The supporting installation 1 and the belt pile 3 are arranged in an enclosing housing through which air flows.

The sequence of operations of such an air treatment plant can be, for instance, such that a food product is placed on the conveyor belt 2. Then the product is supplied to the housing through an inlet and treated with air while being conveyed in the helical path of the conveyor belt 2 in the housing. When the food product exits the housing, it is removed from the conveyor belt 2, which via a return path is returned to the inlet of the housing.

The supporting installation 2 is arranged to support the belt pile 3 by supporting the lowermost turn of the belt pile 3. The supporting installation 1 is also arranged to raise the lowermost turn to allow insertion of a new lowermost turn of the belt pile 3.

In the embodiment illustrated, the supporting installation 1 is arranged to support the lowermost belt turn of the belt pile 3 along substantially the entire extent thereof.

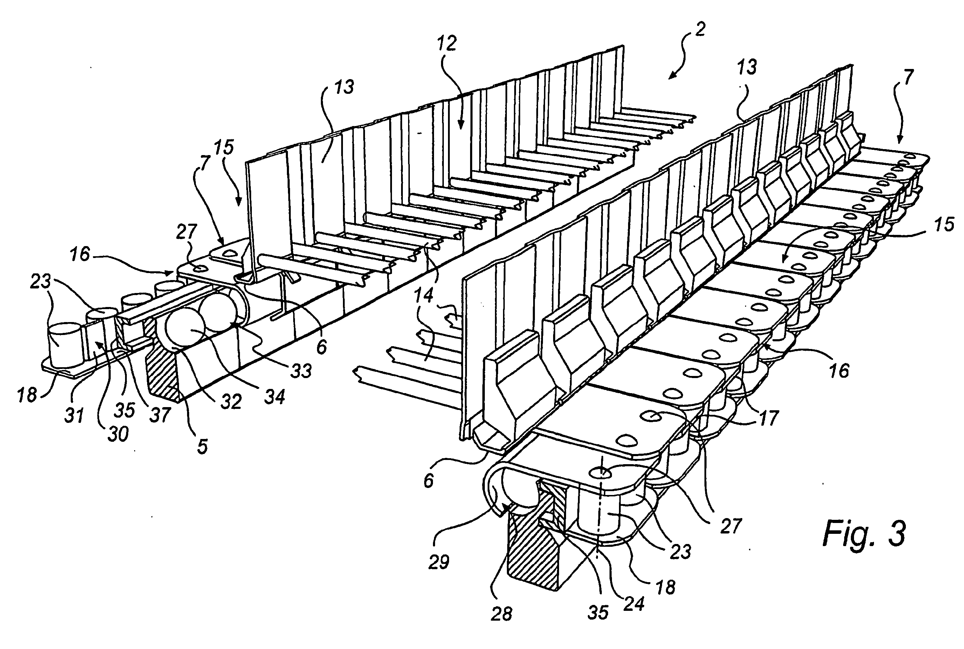

To this end, the supporting installation 1 comprises, as shown more distinctly in Fig. 3 to which reference is now made, two sectional elements 5 which are supported by the frame 4 and which are extended each along an endless path and which are each arranged to support a lateral edge 6 of the lowermost belt turn of the conveyor belt 2 via a conveyor chain 7.

Each conveyor chain 7 runs along a conveyor belt supporting portion 8 and a return portion 9. The conveyor belt supporting portion 8 extends substantially along the entire lateral edge 6 of the lowermost turn of the conveyor belt 2, which lateral edge 6 is adapted to be supported by the associated sectional element 5 via the conveyor chain 7.

The supporting installation 1 can be arranged to support wholly or partly self-supporting conveyor belts 2.

By a self-supporting conveyor belt 2 is meant that at least one lateral edge 6 of a superjacent turn of the belt pile 3 rests on a corresponding lateral edge 6 of a subjacent turn of the belt pile 3.

The supporting installation 1 shown in Fig. 1 is intended for an entirely self-supporting conveyor belt 2 as shown in Fig. 2, which consequently means that a subjacent turn of the belt pile 3 supports a superjacent turn.

The supporting installation 1 is further arranged to drive the conveyor belt 2. In the shown embodiment, said driving of the conveyor belt 2 is performed by advancing the associated conveyor chain 7. Each conveyor chain 7 is advanced by a meshing gear wheel 10, which in turn is driven by an electric motor 11. Each gear wheel 10 engages the associated conveyor chain 7 along the return portion 9 thereof.

However, it will be appreciated that the supporting installation need not be arranged to drive the belt pile but that said driving can be performed in other ways. For instance, it is possible to arrange an interior driving drum, which engages the inside of the belt pile along the entire, or parts of, the height thereof. The supporting installation can also be arranged to drive a belt pile together with a driving drum. The supporting installation can then have a conveyor chain which supports an outer edge of the lowermost turn of the belt pile, while the driving drum engages the inside of the belt pile.

The conveyor belt supporting portion 8 of each conveyor chain 7 has a pitch and consequently takes the shape of a helical turn. The belt pile 3 is thus formed when the opposite lateral edges 6 of the conveyor belt 2 run along the respective conveyor belt supporting portions 8 of the conveyor chains 7. In the embodiment shown, the conveyor belt supporting portions 8 are substantially circular, whereby the formed belt pile 3 takes on a circular cylindrical shape. However, it will be appreciated that the conveyor belt supporting portions 8 can have other shapes, for instance elliptic, whereby the formed belt pile 3 takes on an elliptic cylindrical shape.

The pitch of the conveyor belt supporting portions 8 is such as to correspond to the height of the conveyor belt 2. This means that when the lower turn of the conveyor belt 2 has extended one turn along said conveyor belt supporting portions 8, this turn is piled on a new lowermost turn of the conveyor belt 2.

Fig. 3 illustrates the supporting installation 1 in cooperation with the lowermost belt turn of a belt pile 3.

As mentioned above, the belt pile 3 is formed from a helically extending conveyor belt 2.

In the embodiment shown, the conveyor belt comprises link elements 12 in succession, which are hingedly connected to each other and which each comprise two opposite side plates 13 which are interconnected by transverse rods 14.

The lower belt turn has two lateral edges 6, which are formed by the underside of the respective side plates 13.

Each lateral edge 6 rests on an associated conveyor chain 7 of the supporting installation 1.

Each conveyor chain 7 is in turn supported by the frame 4 via a sectional element 5.

Each conveyor chain 7 is further mounted on bearings so as to be movable along the associated sectional element 5.

The conveyor chains 7 comprise a plurality of alternately arranged outer 15 and inner 16 chain links. More specifically, the outer chain links 15 are spaced from each other, each outer chain link 15 overlapping and being hingedly connected to two inner chain links 16.

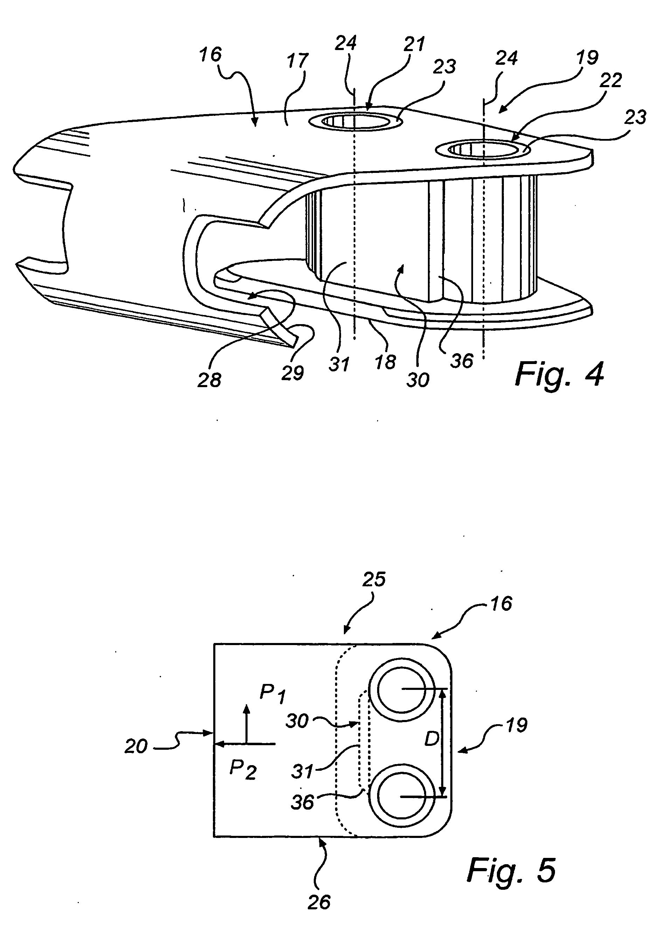

Figs 4 and 5 show a first embodiment of such an inner chain link 16.

The inner chain link 16 comprises an upper flange 17 and a lower flange 18. The upper flange 17 is in a first lateral portion 19 connected to the lower flange 18 via a first connecting element 21 and a second connecting element 22.

The first and the second connecting element 21, 22 are formed as cylindrical sleeves 23, which each extend along a hole axis 24.

The first connecting element 21 allows connection of the inner chain link 16 to a neighbouring outer chain link 15 on a first side 25, and the second connecting element 22 allows connection of the inner chain link 16 to a second neighbouring outer chain link 15 on a second side 26 opposite the first side 25. The first and the second connecting element 21, 22 are arranged so that the chain link 16 is laterally pivotable relative to said outer chain links 15.

The chain links 15, 16 of the conveyor chain shown in Fig. 3 are interconnected by pins 27. Each pin 27 has a head portion (not shown) with a first diameter and opposite end portions with a second diameter which is smaller than said first diameter. The outer chain link 15 has a hole whose diameter corresponds to said second diameter. Holes are formed in the upper and the lower flange 17, 18 of the sinner chain link 16, which holes are aligned with a through hole of the respective sleeves 23 to provide an inner diameter of the respective connecting elements 21, 22, which inner diameter is greater than the diameter of the head portion of the pin 27. Finally the head portion of the pin 27 has a length which exceeds the sum of the length of the sleeve 23 and the thickness of the upper and the lower flange 17, 18.

For connection of an outer chain link-15 to an inner chain link 16, the hole of the outer chain link 15 is thus aligned with one connecting element 21, 22 of the inner chain link 16. Subsequently a pin 27 is inserted from below so that its one end portion projects through the hole of the outer chain link 15. Said end portion can then be upset in a suitable manner for locking of the pin 27. Finally, a washer can be arranged around the opposite end portion and is then correspondingly upset. This results in an interconnection with a play allowing mutual turning both horizontally and vertically between the inner chain link 16 and the outer chain links 15.

The connecting elements 21, 22 are further arranged at a distance D from each other in a direction P1 along which the inner chain link 16 and the outer chain links 15 are arranged.

By the connecting elements 21, 22 being arranged at a distance D from each other, a space is formed between them, into which teeth of a gear wheel 10 can be inserted for engagement with the chain link 16 to advance the conveyor chain 6 and thus drive the belt pile 3 supported by the supporting installation 1 via said conveyor chain 7.

The upper flange 17 of the inner chain link 16 further has a bearing seat 28 in a second lateral portion 20 opposite the first lateral portion 19. More specifically, the bearing seat 28 is formed by the upper flange 17 of said second lateral portion 20 having a curved inside 29.

The inner chain link 16 further comprises a bearing element 30 with a sliding surface 31, which in said direction P1 extends between the first and the second connecting element 21, 22 and is, relative to them, laterally displaced in a direction P2 towards the second lateral portion 20 of the upper flange 17.

It will be appreciated that the bearing element 30 can be so laterally displaced that its sliding surface 31 is arranged in a plane which is tangent to the connecting elements 21, 23.

The lower flange 18 extends in said direction P2 towards the second lateral portion 20 of the upper flange 17 so that it projects from said sliding surface 31.

It will be appreciated that the inner chain link 16 could be connected to neighbouring chain links of the same type by using a suitably designed connecting means.

Fig. 3, to which reference is now made once more, shows, as mentioned above, the sectional elements 5 which support the conveyor chains 7.

Each sectional element 5 has a bearing race 32 which extends at least along substantially the entire conveyor belt supporting portion 8 of the respective conveyor chains 7. The bearing race 32 defines, together with the bearing seats 28 of the chain links 16, a channel, in which roll elements 33 in the form of balls 34 are arranged.

The roll elements 33 cooperate with the respective sectional elements 5 to take up both vertical and radial forces which are exerted by the conveyor belt 2 on the frame 4 via the conveyor chains 7.

Moreover each sectional element 5 has a sliding strip 35 extended at least along said conveyor belt supporting portion 8.

As shown in Fig. 3, the lateral edges 6 of the lowermost belt turn are slightly displaced in the lateral direction relative to the roll elements 33. By the weight of the belt pile 3 being eccentrically transferred relative to the roll elements 33, the chain links 16 are exposed to a torque which strives to tilt the chain links. This torque is counteracted due to the fact that the sliding surface 31 of the bearing element 30, together with a horizontal abutment surface 37 of the lower flange 18, abuts against the sliding strip 35.

As mentioned above, the sliding surface 31 extends between the first and the second connecting element 21, 22 and is laterally displaced relative to the same. More specifically, the sliding surface 31 is laterally displaced so that the sliding surface 31 is movable into abutment against and slidable along the sliding strip 35. The sliding surface 31 is further arranged in a plane which is parallel to a plane coinciding with the hole axes 24 of the connecting elements 21, 22.

If the sliding surface is arranged in a plane which is tangent to the connecting elements 21, 22, they too will make contact with the sliding strip when the sliding surface 31 of the bearing element 30 is moved into abutment against the sliding strip.

The bearing element 30 further has a bevel 36 along the associated vertical lateral edge of the sliding surface 31. The purpose of the bevels 36 is to prevent cutting or planing engagement between the sliding surface 31 and the sliding strip 35.

According to the present invention, a supporting installation 1 is thus provided with at least one conveyor chain 7 comprising chain links 16 which are less prone to wearing out due to high load or abrasive materials with respect to the sliding strip 35 of the sectional element 5. More specifically this is achieved by means of a bearing element 30 with a sliding surface 31, which is extended between the connecting elements 21, 22 of the chain link 16 and is laterally displaced relative to the same so that the sliding surface 31 is movable into abutment against and slidable along the sliding strip 35. The sliding surface 31 thus provides a large contact surface between the sliding strip 35 and the chain link 16, thereby distributing the wear on the chain link 16 over a larger surface. At the same time it will be possible to prevent contact, or at least minimise the contact, between the connecting elements 21, 22 and the sliding strip 35, which means that the connecting elements will not be subjected to considerable wear. As a result, the life of service of each chain link 16, and thus also of the conveyor chain 7, will be extended, which for obvious reasons gives advantages in terms of cost and production.

The inventive chain link is expected to have so good resistance to wear that the life of service of a conveyor chain comprising such chain links is not determined by the wear that arises as they engage the sliding strip. The life of service will instead be determined by other factors, such as tension and load.

It will be appreciated that the present invention is not limited to the embodiment described above.

Alternative embodiments of inventive chain links will now be described. Components with a similar function have been given the same reference numerals throughout the text.

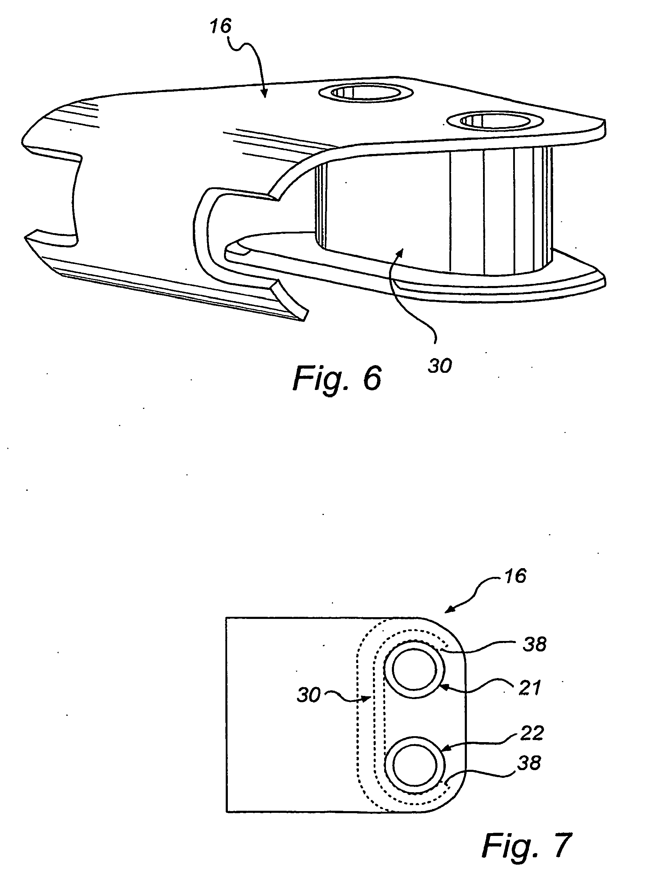

Figs 6 and 7, to which reference is now made, illustrate an inventive chain link 16 having a replaceable bearing element 30. A worn-out bearing element 30 can thus easily be replaced with a new. This results in one more advantage. The fact that the chain link 16 has a bearing element 30 implies that the wear is distributed over a relatively larger surface, and therefore the chain link can be used for a longer period of time before wear causes the chain link to tilt above a predetermined threshold value. Moreover the fact that the bearing element can be replaced means that the chain link can easily be restored to its original state at a low cost.

More specifically, the bearing element 30 is arranged so that it is connected to the connecting elements 21, 22 of a chain link 16 by a snap lock function. To this end, the bearing element 30 is made of spring steel and is substantially C-shaped in cross-section. This makes it possible to fix the bearing element 30 by snap action so that its end portions 38 each grasp a connecting element 21, 22.

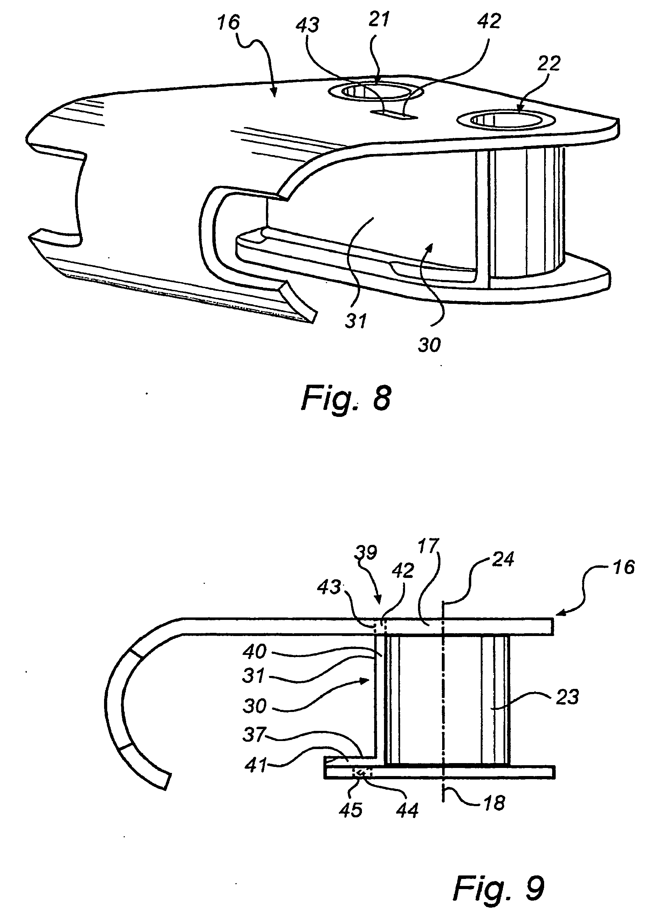

Figs 8 and 9, to which reference is now made, illustrate another embodiment of an inventive chain link 16. Also this chain link 16 comprises a replaceable bearing element 30, which in this case is made from an L-shaped sectional element, which can be secured by a snap lock function.

The free end 39 of the upright leg 40 of the L-shaped sectional element may have a projection 42, which is insertable into a complementarily formed hole 43 in the upper flange 17 of the chain link. Moreover a resilient tongue 44 is arranged in the base leg 41 of the L-shaped sectional element, which tongue 44 is arranged for cooperation with a complementary hole 45 which is formed in the lower flange 18 of the chain link 16. To fasten the bearing element 30, the L-shaped sectional element is angled, after which said projection 42 is inserted through said hole 43 in the upper flange 17. Subsequently the L-shaped sectional element is turned upwards so that the side, facing away from the connecting elements 13, of the upright leg 40 forms a sliding surface 31 parallel to the hole axes 24 of the connecting elements 21, 22. The tongue 44 of the base leg 41 will thus be moved to a position, in which, by snap action, it is moved into the hole 45 formed in the base leg 40. An advantage of this embodiment is that the upper side of the base leg forms an abutment surface 37 which can easily be replaced when worn out.

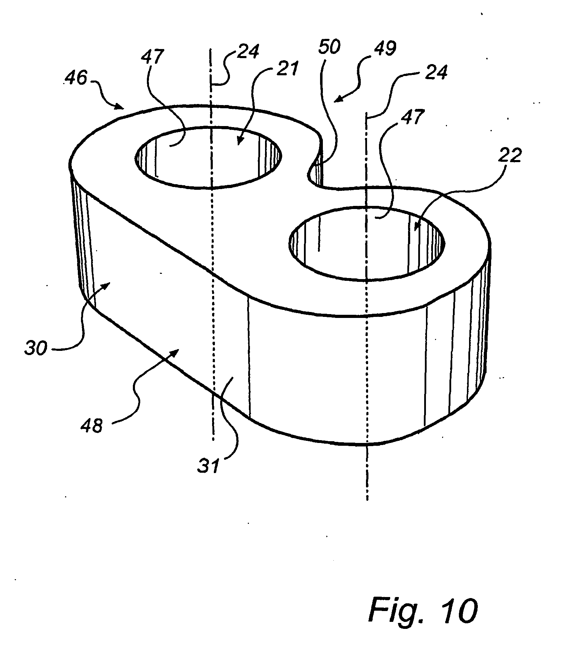

Fig. 10 illustrates another embodiment of an inventive chain link. In this embodiment, the connecting elements 21, 22 and the bearing element 30 are formed in one piece, and the Figure thus shows a body 46, in which two through holes 47 with parallel hole axes 24 are formed. The holes 47 form said first and second connecting elements 21, 22, the body 46 having a lateral surface 48 which is arranged parallel to said hole axes 24 and forms the sliding surface 31 of said bearing element 30. A recess 50 can be formed in the lateral surface 49, opposite said sliding surface 31, of the body 46 and be arranged to engage a gear wheel for advancing a conveyor chain provided with chain links according to this embodiment, and thus driving the belt pile 3 supported by the supporting installation 1 via said conveyor chain 7. The body 46 is adapted to be arranged between, and connected to, an upper flange (not shown) and a lower flange (not shown) as described above in connection with the other embodiments.

Several modifications and variations are thus conceivable, and therefore the scope of the present invention is exclusively defined by the appended claims.

## Claims

1. A chain link for a conveyor chain included in a supporting installation, comprising
an upper flange (17) and a lower flange (18),
a first connecting element (21) adapted to connect the chain link to a first neighbouring chain link,
a second connecting element (22) adapted to connect the chain link to a second neighbouring chain link,
said first and second connecting elements (21, 22) being arranged so that the chain link is laterally pivotable relative to said first and second neighbouring chain links,
said chain link and said first and second neighbouring chain links being adapted to be arranged along a longitudinal direction (P1), and
said lower flange being connected to said upper flange and arranged at a distance therefrom seen in a direction perpendicular to both said longitudinal direction (P1) and a transverse direction (P2) of the chain link,
**characterised in that** the chain link further comprises
a bearing element (30) which is arranged between said upper flange (17) and lower flange (18) and has a sliding surface (31), which extends in the direction (P1) and, relative to said connecting element, is laterally displaced so that said sliding surface (31) is movable into abutment against and slidable in said longitudinal direction (P1) along a sliding strip (35) provided in the supporting installation.

2. A chain link as claimed in claim 1, , wherein said first and second connecting elements (21, 22) being arranged at a distance (D) from each other in the longitudinal direction (P1).

3. A chain link as claimed in claim 1 or 2, wherein said first connecting element (21) extended along a hole axis (24) and said second connecting element (22) extended along a hole axis (24), and wherein said sliding surface (31) is parallel to a plane coinciding with the hole axes (24) of the connecting elements (21, 22).

4. A chain link as claimed in any one of claims 1-3, wherein said sliding surface (31) extends between the first (21) and the second (22) connecting element.

5. A chain link as claimed in any one of the preceding claims, further comprising a bearing seat (28).

6. A chain link as claimed in any one of the preceding claims, further comprising a recess (50) which allows engagement with a drive device.

7. A chain link as claimed in any one of the preceding claims, in which said bearing element (30) is detachably arranged.

8. A chain link as claimed in claim 7, in which said bearing element (30) is connected to said connecting elements (21, 22) by a snap lock arrangement.

9. A chain link as claimed in claim 8, in which said bearing element (30) is C-shaped in cross-section.

10. A chain link as claimed in claim 9, in which said bearing element (30) is made of spring steel.

11. A chain link as claimed in claim 8, in which said bearing element (30) is L-shaped in cross-section.

12. A chain link as claimed in claim 11, in which said bearing element (30) has a base leg (41), in which a resilient tongue (44) is arranged for engagement in a hole (45) in the chain link.

13. A chain link as claimed in any one of claims 1-7, comprising a body (46), in which two through holes (47), which are extended along mutually parallel hole axes (24), are formed, which holes (47) form said first (21) and second (22) connecting element, said body (46) having a lateral surface (48) which is arranged parallel to said hole axes (24) and form said bearing element (30).

14. A conveyor chain for a supporting installation, comprising a plurality of chain links (16) as claimed in any one of claims 1-13.

15. A supporting installation for supporting and driving a number of belt turns, which extend helically one above the other in a pile and are included in an at least partly self-supporting conveyor belt (2), comprising
a conveyor chain (7) arranged to support an edge portion of the lowermost belt turn along at least part of its extent and comprising a plurality of chain links (16) as claimed in any one of claims 1-13, and
a frame (4) which is arranged to support the conveyor chain (7) and which has a sectional element (8) with an elongate bearing race (32) and an elongate sliding strip (35).

## Patentansprüche

1. Kettenglied für eine Förderkette, die in einer Stützvorrichtung enthalten ist, Folgendes umfassend:
einen oberen Flansch (17) und einen unteren Flansch (18),
ein erstes Verbindungselement (21), das dafür eingerichtet ist, das Kettenglied mit einem ersten benachbarten Kettenglied zu verbinden,
ein zweites Verbindungselement (22), das dafür eingerichtet ist, das Kettenglied mit einem zweiten benachbarten Kettenglied zu verbinden,
wobei das erste und das zweite Verbindungselement (21, 22) derart angeordnet sind, dass das Kettenglied im Verhältnis zum ersten und zum zweiten benachbarten Kettenglied seitlich drehbar ist,
wobei das Kettenglied und das erste und das zweite benachbarte Kettenglied dafür eingerichtet sind, in einer Längsrichtung (P1) angeordnet zu sein, und
wobei der untere Flansch mit dem oberen Flansch verbunden ist und, in senkrechter Richtung zu sowohl der Längsrichtung (P1) als auch einer Querrichtung (P2) des Kettengliedes betrachtet, in einem Abstand zu diesem angeordnet ist,
**dadurch gekennzeichnet, dass** das Kettenglied ferner ein Lagerelement (30) umfasst, das zwischen dem oberen Flansch (17) und dem unteren Flansch (18) angeordnet ist und eine Gleitfläche (31) aufweist, die sich in Richtung (P1) erstreckt und im Verhältnis zum Verbindungselement seitlich versetzt ist, so dass die Gleitfläche (31) zum Anliegen an einen Gleitstreifen (35), der in der Stützvorrichtung bereitgestellt ist, gebracht werden kann und entlang diesem in Längsrichtung (P1) gleitfähig ist.

2. Kettenglied nach Anspruch 1, wobei das erste und das zweite Verbindungselement (21, 22) in Längsrichtung (P1) in einem Abstand (D) voneinander angeordnet sind.

3. Kettenglied nach Anspruch 1 oder 2, wobei sich das erste Verbindungselement (21) entlang einer Öffnungsachse (24) erstreckt und sich das zweite Verbindungselement (22) entlang einer Öffnungsachse (24) erstreckt und wobei die Gleitfläche (31) parallel zu einer Ebene liegt, die sich mit den Öffnungsachsen (24) der Verbindungselemente (21, 22) deckt.

4. Kettenglied nach einem der Ansprüche 1 bis 3, wobei sich die Gleitfläche (31) zwischen dem ersten (21) und dem zweiten (22) Verbindungselement erstreckt.

5. Kettenglied nach einem der vorhergehenden Ansprüche, ferner einen Lagersitz (28) umfassend.

6. Kettenglied nach einem der vorhergehenden Ansprüche, ferner eine Vertiefung (50) umfassend, die den Eingriff mit einer Antriebsvorrichtung ermöglicht.

7. Kettenglied nach einem der vorhergehenden Ansprüche, bei welchem das Lagerelement (30) lösbar angeordnet ist.

8. Kettenglied nach Anspruch 7, bei welchem das Lagerelement (30) durch eine Schnappriegelanordnung mit den Verbindungselementen (21, 22) verbunden ist.

9. Kettenglied nach Anspruch 8, bei welchem das Lagerelement (30) im Querschnitt C-förmig ist.

10. Kettenglied nach Anspruch 9, bei welchem das Lagerelement (30) aus Federstahl hergestellt ist.

11. Kettenglied nach Anspruch 8, bei welchem das Lagerelement (30) im Querschnitt L-förmig ist.

12. Kettenglied nach Anspruch 11, bei welchem das Lagerelement (30) einen Fuß (41) aufweist, in welchem eine elastische Zunge (44) für den Eingriff in eine Öffnung (45) im Kettenglied angeordnet ist.

13. Kettenglied nach einem der Ansprüche 1 bis 7, einen Körper (46) umfassend, in welchem zwei Durchgangsöffnungen (47) gebildet sind, die sich entlang zueinander paralleler Öffnungsachsen (24) erstrecken, wobei die Öffnungen (47) das erste (21) und das zweite (22) Verbindungselement bilden, wobei der Körper (46) eine Seitenfläche (48) aufweist, die parallel zu den Öffnungsachsen (24) angeordnet ist und das Lagerelement (30) bildet.

14. Förderkette für eine Stützvorrichtung, mehrere Kettenglieder (16) nach einem der Ansprüche 1 bis 13 umfassend.

15. Stützvorrichtung zum Stützen und Antreiben einer Anzahl von Bandwindungen, die sich spiralförmig in einem Stapel übereinander erstrecken und in einem zumindest teilweise selbsttragenden Förderband (2) enthalten sind, Folgendes umfassend:
eine Förderkette (7), die angeordnet ist, um einen Randabschnitt der untersten Bandwindung über zumindest einen Teil ihrer Ausdehnung zu stützen, und die mehrere Kettenglieder (16) nach einem der Ansprüche 1 bis 13 umfasst, und
einen Rahmen (4), der angeordnet ist, um die Förderkette (7) zu stützen, und der ein Querelement (8) mit einer länglichen Lagerlauffläche (32) und einem länglichen Gleitstreifen (35) aufweist.

## Revendications

1. Maillon de chaîne pour chaîne transporteuse incluse dans une installation de support, comprenant:
une bride supérieure (17) et une bride inférieure (18),
un premier élément de raccordement (21) adapté pour raccorder le maillon de chaîne à un premier maillon de chaîne voisin,
un second élément de raccordement (22) adapté pour raccorder le maillon de chaîne à un second maillon de chaîne voisin,
lesdits premier et second éléments de raccordement (21, 22) étant agencés de sorte que le maillon de chaîne soit pivotable latéralement par rapport auxdits premier et second maillons de chaînes voisins,
ledit maillon de chaîne et lesdits premier et second maillons de chaînes voisins étant adaptés pour être agencés le long d'une direction longitudinale (P1), et
ladite bride inférieure étant raccordée à ladite bride supérieure et agencée à une distance de celle-ci vue dans une direction perpendiculaire à la fois à ladite direction longitudinale (P1) et une direction transversale (P2) du maillon de chaîne,
**caractérisé en ce que** le maillon de chaîne comprend en outre
un élément de palier (30) qui est agencé entre ladite bride supérieure (17) et ladite bride inférieure (18) et possède une surface coulissante (31), qui s'étend dans la direction (P1) et, par rapport audit élément de raccordement, est déplacée latéralement de sorte que ladite surface coulissante (31) soit déplaçable en butée contre et coulissable dans ladite direction longitudinale (P1) le long d'une bande coulissante (35) prévue dans l'installation de support.

2. Maillon de chaîne selon la revendication 1, dans lequel lesdits premier et second éléments de raccordement (21, 22) sont agencés à une distance (D) l'un de l'autre dans la direction longitudinale (P1).

3. Maillon de chaîne selon la revendication 1 ou 2, dans lequel ledit premier élément de raccordement (21) étendu le long d'un axe de trou (24) et ledit second élément de raccordement (22) étendu le long d'un axe de trou (24), et dans lequel ladite surface coulissante (31) est parallèle à un plan coïncidant avec les axes de trou (24) des éléments de raccordement (21, 22).

4. Maillon de chaîne selon une quelconque des revendications 1 à 3, dans lequel ladite surface coulissante (31) s'étend entre le premier (21) et le second (22) éléments de raccordement.

5. Maillon de chaîne selon une quelconque des revendications précédentes, comprenant en outre un siège de palier (28).

6. Maillon de chaîne selon une quelconque des revendications précédentes, comprenant en outre une cavité (50) qui permet une mise en prise avec un dispositif d'entraînement.

7. Maillon de chaîne selon une quelconque des revendications précédentes, dans lequel ledit élément de palier (30) est agencé de manière amovible.

8. Maillon de chaîne selon la revendication 7, dans lequel ledit élément de palier (30) est raccordé auxdits éléments de raccordement (21, 22) par un dispositif de verrou à ressort.

9. Maillon de chaîne selon la revendication 8, dans lequel ledit élément de palier (30) a une section transversale en forme de C.

10. Maillon de chaîne selon la revendication 9, dans lequel ledit élément de palier (30) est fabriqué en acier à ressort.

11. Maillon de chaîne selon la revendication 8, dans lequel ledit élément de palier (30) a une section transversale en forme de L.

12. Maillon de chaîne selon la revendication 11, dans lequel ledit élément de palier (30) possède une jambe de base (41), dans lequel une languette résiliente (44) est disposée afin de s'engager dans un trou (45) dans le maillon de chaîne.

13. Maillon de chaîne selon une quelconque des revendications 1 à 7, comprenant un corps (46), dans lequel deux trous traversants (47), qui sont étendus le long d'axes de trous (24) mutuellement parallèles, sont formés, lesquels trous (47) forment ledit premier (21) et ledit second (22) élément de raccordement, ledit corps (46) ayant une surface latérale (48) qui est agencée parallèlement auxdits axes de trous (24) et forme ledit élément de palier (30).

14. Chaîne transporteuse pour installation de support, comprenant une pluralité de maillons de chaîne (16) selon une quelconque des revendications 1 à 13.

15. Installation de support pour supporter et entraîner un certain nombre de tours de bande, qui s'étendent hélicoïdalement l'un au-dessus de l'autre dans une pile et sont inclus dans une bande transporteuse (2) au moins partiellement autosupportée, comprenant :
une chaîne transporteuse (7) agencée pour supporter une portion de bord du tour de bande le plus bas le long d'au moins une partie de son extension et comprenant une pluralité de maillons de chaîne (16) selon une quelconque des revendications 1 à 13, et
un châssis (4) qui est agencé pour supporter la chaîne transporteuse (7) et qui possède un élément sectionnel (8) avec un chemin de roulement allongé (32) et une bande coulissante allongée (35).
